# EUROPEAN PATENT SPECIFICATION

(11) **EP 0 380 283 B1**
(45) Date of publication and mention of the grant of the patent: **20.09.1995**
(21) Application number: 90300660.9
(22) Date of filing: 22.01.1990
(51) Int. Cl.: G11B 5/596, G11B 5/55

(54) **Magnetic disk file with wide servo head**
Magnetplattenspeicher mit breitem Servokopf
Mémoire à disque magnétique avec tête d'asservissement large

(30) Priority: 27.01.1989 US 303482
(43) Date of publication of application: 01.08.1990
(73) Proprietor: International Business Machines Corporation, Armonk, N.Y. 10504 (US)
(72) Inventor: Cunningham, Earl Albert, Rochester, Minnesota 55901 (US)
(74) Representative: Moss, Robert Douglas

(56) References cited:
- US-A- 4 402 025
- PATENT ABSTRACTS OF JAPAN vol. 6, no. 195 (P-146) 5 October 1982,& JP-A-57 105870 (FUJITSU LTD) 1 July 1982,
- PATENT ABSTRACTS OF JAPAN vol. 11, no. 109 (P-564) 7 April 1987,& JP-A-61 258326 (HITACHI LTD) 15 November 1986,

## Description

### Field of the Invention

The present invention relates to magnetic disk files, and more particularly to disk files employing a position control system with a servo head wider than the servo tracks.

### Description of the Prior Art

Disk files incorporating stacked, commonly rotated rigid magnetic disk are used for storage of data in magnetic form on the disk surfaces.

Transducer data heads, driven across the disk in an at least partly radial direction, write data to and read data from the disks. The data are usually recorded in concentric, radially spaced data information tracks arrayed on the surfaces of the disks. Such a disk file is known for example from US-A-4 402 025.

Servo position control is used to position these data heads in registration with the data information tracks. One known form of servo system uses a dedicated transducer servo head to read position signals recorded in servo information tracks on a disk surface. The data heads are ganged with the servo head for simultaneous movement relative to the data information tracks and the servo information tracks respectively. To access a disk, a feedback controlled drive system locates the servo head in the desired position, thereby locating the data head in registration with a specific data information track to which or from which data are to be written or read.

JPA-57-105870 describes a servo system in which the servo pattern repeats every four tracks, and is used to provide an amplitude-encoded quadrature servo pattern. The servo head used to read the amplitude-encoded pattern has a width equal to the width of three tracks.

In one known rigid disk file servo position control system, servo information tracks are arrayed in concentric circles about the disk axis at intervals equal to one half of the intervals of the similarly arranged data information tracks. Servo information is written to the servo tracks with timing variations from track to track, and the phase difference between tracks is detected by the servo transducer head as an indicator of radial head position. A servo system using such phase-encoded information is known from US-A-4 549 232.

In one known skewed phase pattern, the servo information is circumferentially offset by twenty-two and one half degrees between adjacent tracks in radial progression across the disk surface. The servo transducer head reads this information from the rotating disk surface to supply a position error signal for the feedback drive system that locates the servo head, and thus the data heads, in the desired position. There is a direct two to one correspondence between servo tracks and data tracks, and when the servo head is located with respect to a particular pair of servo tracks, the data head is located with respect to one corresponding data track.

Servo heads used currently are wide enough to read a single data information track or a single pair of servo information tracks. Known servo transducer heads have generally uniform characteristics and uniform spacing from the magnetic medium across their width. Consequently, known servo heads have uniform sensitivity to recorded information from edge to edge.

### Disclosure of the Invention

Position error signals provided by this prior art arrangement are subject to problems leading to difficulties in accurate and consistent head positioning during disk access. The signal detected by a servo transducer head of conventional width is strongly affected by the abrupt phase jumps between adjacent servo information tracks. As a result, a conventional head is incapable of providing a smooth, linearly varying position error signal. In addition, the position error signal is low in amplitude and is undesirably sensitive to non-uniformities, such as variations in written track density, servo head dimensional tolerances, and misregistration between servo and data tracks. Another disadvantage of the conventional design is that the position error signal is adversely affected by head jitter in both the circumferential and radial directions which may accompany irregular bearing runout during writing of the servo tracks.

In addition to these problems, yet another difficulty with the standard servo head arises from the effect of the edge fringe areas that separate the written servo information tracks. These non-magnetised regions between tracks act as dead zones in which no signal change is detected in response to radial increments of servo head position. The severity of this undesired effect depends upon servo head width compared to track width. If the head width is equal to an integer number of track widths, no gain in position error signal is present when both edges of the head are aligned with edge fringe areas. For other widths, gain is seriously attenuated when either edge of the head is aligned with an edge fringe area.

Accordingly, the present invention provides a magnetic disk file including: at least one disk mounted for rotation about an axis; a plurality of data tracks on at least a first disk surface; a plurality of servo tracks on at least a second disk surface in fixed positional relationship with said data tracks, said servo tracks including phase-encoded position information signals whereby their phase is skewed from one servo track to the next in radial progression across the disk; a data head mounted for movement across said first disk surface for transferring data to or from individual data tracks; a servo head mounted for movement across said second disk surface for reading said phase-encoded position information signals from said servo tracks, the servo and data heads being ganged for movement together; a position control system for positioning said servo head at a selected position relative to said servo tracks in response to the phase of said phase-encoded position information signals; and characterised in that said servo head has a sensitive width sufficient to span at least three of said servo tracks.

By employing a wider servo transducer head for detecting a position error signal from radially skewed position signals in servo information tracks in a disk file, a highly linear position error signal which is relatively insensitive to factors including track width, written track density, track misregistration and jitter is obtained. The improved servo information head has a robust design that is relatively inexpensive to make and is not subject to close tolerance requirements; and problems arising from the abrupt phase jumps between adjacent servo information tracks are reduced.

Although described in relation to a multi disk file, the invention is applicable wherever a dedicated servo surface and servo head are provided, for example on the opposite side of a single disk to the data surface.

In a preferred embodiment of the invention, the radially skewed progression of position information signals repeats in phase across a number "n" of servo tracks, and the servo head spans n/2 of said servo tracks. The preferred width of the servo head is eight servo tracks.

In an optional preferred embodiment of the invention, the sensitivity of said servo head to said plurality of position information signals on the disk surface varies across the width of the servo head. This variation of sensitivity is achieved by having a nonuniform transducing separation between the servo head and the disk surface across the width of the servo head, although other methods of obtaining the desired variation in sensitivity, such as a servo head of nonuniform length in a direction parallel to the servo information tracks, are clearly possible. Such sensitivity variation helps to overcome difficulties arising from edge fringe fields between adjacent servo tracks.

### Brief Description of the Drawings

FIG. 1 is a partly schematic and simplified vertical sectional view of a rigid magnetic disk file according to the present invention;
FIG. 2 is a top plan view of the disk file of FIG. 1;
FIG. 3 illustrates the relationship between disk file servo tracks and a servo head in a prior art file;
FIG. 4 illustrates a variant of the relationship shown in FIG. 3;
FIG. 5 illustrates the relationship according to the invention between disk file data tracks, servo tracks, and a servo head, in the disk file of FIG. 1;
FIG. 6 is a fragmentary schematic sectional view through a disk and part of the servo head in the disk file of FIG. 1;
FIG. 7 is a fragmentary sectional view through a disk and part of an alternative servo head according to an additional feature of the invention in a disk file similar to that of FIG. 1;
FIG. 8 is a graph illustrating the sensitivity of the servo head shown in FIG. 7 across the width of the head; and
FIG. 9 is a graph illustrating the sensitivity gain of the servo head shown in FIG. 7 across the width of the head.

### Detailed Description of the Invention

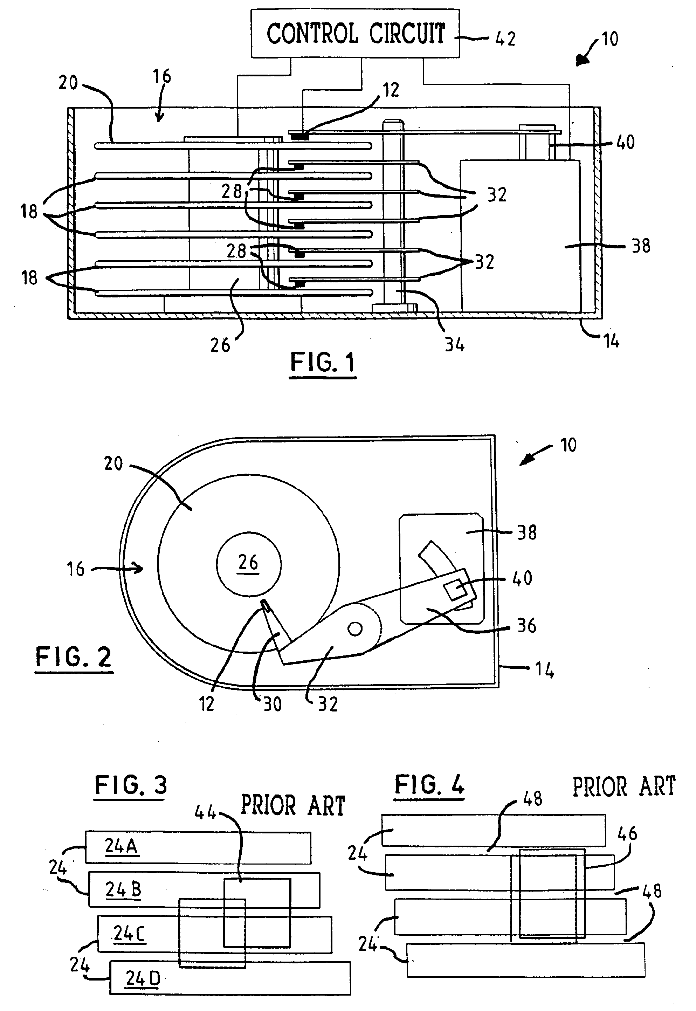

Referring now to FIGS. 1 and 2 of the drawings, there is shown a rigid magnetic disk file according to the invention, generally designated as 10, and including a dedicated servo transducer head 12. Unit 10 is illustrated in greatly simplified form sufficient for an understanding of the present invention.

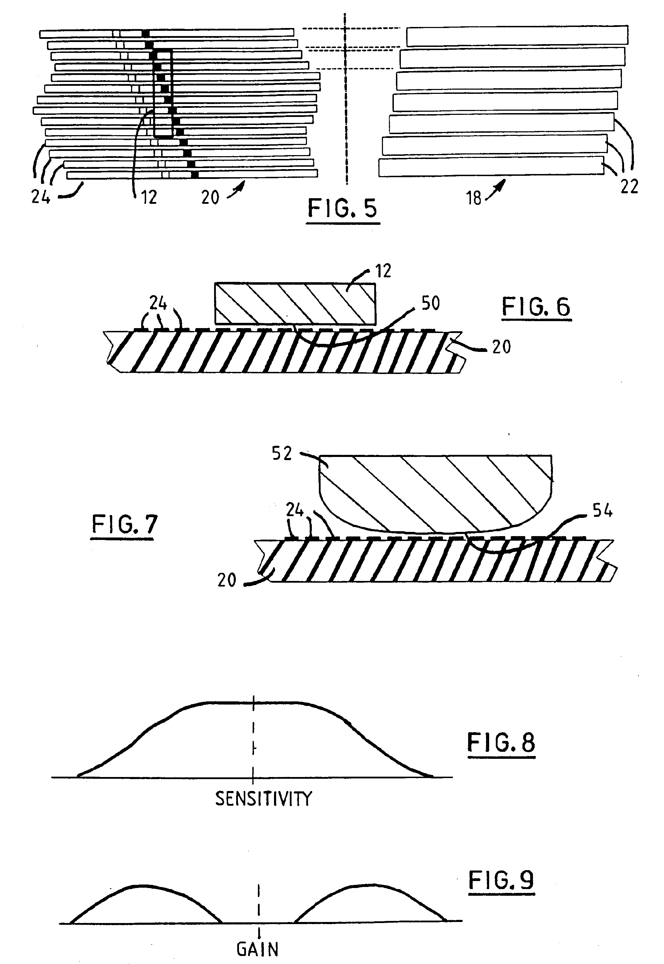

Disk file 10 includes a housing 14 enclosing a stack 16 of disks 18 and 20 having magnetic surfaces. Disks 18 are data disks on which numerous data information tracks 22 (FIG. 5) are arrayed in a concentric pattern on a layer of magnetic material on the disk surface. Disk 20 includes a pattern of concentric servo information tracks 24 on the disk surface. The disks 18 and 20 are mounted in parallel for simultaneous rotation on and by an integrated spindle and motor assembly 26. The data information tracks 22 on disks 18 are read from and/or written to by data transducer heads 28 movable across the disk surface. The servo information tracks are read by the servo transducer head 12. The disks are shown as single sided for simplicity, but most rigid magnetic disk files employ disks with opposed magnetic surfaces and transducer heads on both sides of each disk.

Transducer heads 12 and 28 are mounted on flexure springs 30 carried by arms 32, which are ganged together for simultaneous pivotal movement about a support spindle 34. One of the arms 32 includes an extension 36 driven in a pivotal motion by a head drive motor 38. Although several drive arrangements are commonly used, the illustrated motor 38 includes a coil 40 cooperating with a magnet and core assembly (not seen).

When a call for disk access is received in conventional manner by a control circuit 42, motor 26 is operated to rotate the disk stack 16 and the control circuit employs known servo control principles to move the data heads 28 into a selected radial position with one head 28 aligned with a single data information track to which or from which data are to be read or written. This positioning operation utilises feedback control to locate the servo transducer head 12 in a specific radial position corresponding to the selected radial position of the data head 28 at which disk access is requested. A position error signal is detected as the servo information tracks 24 are read by the servo transducer head 12, and the position error signal is communicated to the control circuit 42 for feedback controlled operation of the motor 38.

Servo transducer head 12 is a dedicated head because it is used only to read position information recorded in the servo information tracks of disk 20. As seen in FIG. 5, the pitch of the data information tracks 22 is larger than the pitch of the servo information tracks, with two servo information tracks corresponding to each single data information track. When the servo transducer head is centred in radial alignment with the proper pair of servo information tracks by circuit 42 and motor 38, the data transducer heads are radially aligned with specific corresponding data information tracks. This particular geometric relationship is not a requirement of this invention.

In the disk file of FIGS. 1 and 5, the position information signals include signals that are written to the servo information tracks with a timing deviation in the form of sequential phase offsets between adjacent tracks. This position information is typically pre-recorded on disk 20 incident to the manufacture of the disk file 10. As the servo transducer head 12 moves radially with respect to the rotating disk 20, the relative phase differences between adjacent tracks are detected and used by control circuit 42 as an indication of radial head position. Since the data transducer heads 28 must be aligned relative to disks 18 with a high degree of accuracy, it is important that the position error signal detected by head 12 be as linear as possible with constant gain during radial movement.

FIGS. 3 and 4 illustrate the interaction of prior art servo transducer heads 44 and 46 with servo information tracks 24. These illustrations are highly diagrammatic, and are not to scale. FIG. 3 shows a conventional servo transducer head 44 having a width slightly less than two half-pitch servo information tracks 24, corresponding to a single data information track. In a typical arrangement, the adjacent tracks 24A, 24B, 24C and 24D include position information signals that are radially skewed or offset by 22.5 degrees per track. Thus, between each pair of adjacent tracks, there is an abrupt phase jump of 22.5 degrees. Different systems may use different offsets, but the abrupt phase jump remains.

In the solid line position of head 44 in FIG. 3, the head is centred over two adjacent tracks 24B and 24C. The head detects a position error signal that is a phase average of the signals recorded in tracks 24B and 24C. In response to incremental radial movement of head 44 from this position, the position error signal changes. The rate of change of the position error signal with radial displacement is referred to as the gain of the signal. For movement during which the head 44 continues to overlie only the tracks 24B and 24C, the gain is generally constant as the phase of the position error signal changes in proportion to the varying relative contributions of the phases of the two tracks.

In the position shown in dotted lines in FIG. 3, the head 44 is generally centred on track 24C with its edges overlying the adjacent tracks 24B and 24D. Upon incremental radial head movement, the contribution of the signal of track 24C does not change because it is fully coupled to the head 44. The detected position error signal changes with the variation in the proportions contributed by the two adjacent tracks 24B and 24D. In this incremental motion, the gain of the position area signal is also generally constant, but it has a different value from the gain of the signal described above, when only two tracks are read. In the solid line head position of FIG. 3, the varying signals from tracks 24B and 24C are offset by 22.5 degrees. In contrast, in the dotted line head position, the varying signals from tracks 24B and 24D are offset by 45 degrees. This fact produces the different gain characteristics at the full and dotted line positions of head 44. The nonlinearity of the position control signal resulting from the track to track phase jumps impairs the accuracy and speed of the servo control system.

A further difficulty of a conventional servo transducer head 46 is illustrated in FIG. 4. Head 46 is somewhat wider than head 44 relative to tracks 24, and is equal in width to the pitch of two servo information tracks 24. Differences of this magnitude may arise from track width variations or variations in manufacturing tolerances. In FIG. 4, the fringe edges between the adjacent servo information tracks 24 are designated by reference numeral 48. No position signals are present in these fringe edges, and they represent dead zones between adjacent tracks. In the solid line position of head 46, both edges of the head overlie fringe edges 48. As a result, there is no change in the detected position error signal during incremental movement between the illustrated solid line and dotted line positions. For radial movement in this region, the gain of the position error signal is zero.

The head width relative to the track width can be such that only one edge of the head can overlie a fringe edge at one time. This is the case with the relatively narrower head 44 of FIG. 3. However, even in this case, the position error signal gain is greatly reduced when an edge of the servo transducer head radially traverses a dead zone.

The complete absence of position error signal gain during radial movement of a servo transducer head is highly undesirable. The absence of gain causes an interruption in usable position control feedback information that must be compensated for in some way, such as by filtering or damping or the like. This slows the access time of the disk file and may add expense.

Several of the disadvantages of the known heads 44 and 46 are overcome by the servo transducer head 12 shown in more detail in FIGS. 5 and 6. In accordance with the invention, the head 12 is sufficiently wide to span more of the servo information tracks 24 than the two tracks spanned by conventional heads. In the theoretical preferred embodiment the head 12 is equal in width to eight servo information tracks or four data information tracks.

The phase skew of the position information signals read from the tracks 24 in FIG. 5 is indicated by dark and light timing marks added to the tracks for purposes of illustration. The phase offset is 22.5 degrees and eight tracks 24 are equal to 180 degrees of phase offset. Head 12 reads or detects the signals from eight adjacent tracks and sums or averages them to provide the position error signal for the control circuit 42. This position error signal is a highly linear representation of the relative phase at the centre of the head 12. Gain irregularity resulting from inter-track phase jumps is greatly reduced by this summing of additional tracks. In addition, since signals from several tracks 24 are summed by the head 12, the position error signal has a desirably large amplitude.

These advantages can be achieved at least to some extent with a head width of three or more servo information tracks. Head widths of four and six servo information tracks have been used to avoid skew alignment problems. The benefit of summing the position signals is maximised with a span of eight tracks when the radial phase offset is 22.5 degrees. Additional tracks have signals opposite in phase to the detected eight tracks and would decrease the accuracy of the position error signal.

The cross-sectional shape of the head 12 is indicated in FIG. 6 in a plane intersecting the servo information tracks 24 on disk 20. Tracks 24 are shown as discrete regions raised from the surface of disk 20, although they do not visibly differ from the remaining magnetic surface in an accurate representation. Similarly, only the magnetically responsive part of the head 12 is illustrated and the remaining structure of the head is omitted for clarity. As is conventional, the lower magnetic track reading surface 50 of head 12 is of uniform construction across the head width, and is evenly spaced from the magnetic surface.

While the head 12 overcomes many problems encountered with conventional servo transducer heads, the disadvantage remains that its edges do not contribute to position error signal gain when they overlie a fringe edge between adjacent tracks. A servo transducer head 52 which overcomes this disadvantage is shown in FIG. 7. The sensitivity of the head is non-uniform across its width. Head 52 includes a track reading surface 54 that is not flat across the width of the head. Instead it is shaped so as to provide a gradual change in the reading gap separation between the head reading surface and the magnetic surface of the disk 20. The sensitivity of head 52 to the recorded information varies with the distance between the disk and the head. Head 52 therefore has maximum sensitivity at its centre, with diminishing sensitivity in both directions away from the centre.

The graph of FIG. 8 illustrates the varying sensitivity of head 52. In the central region of the surface 54, the surface may be flat and sensitivity may be constant, and then the sensitivity decreases in a symmetrical fashion on either side of this central region. Although a linear sensitivity decrease could be employed, it is preferable to shape the head 52 to obtain a nonlinear sensitivity function so that the sensitivity gain, or the rate of change in sensitivity across the width of the head 52, has no abrupt changes. In a preferred embodiment, for sinusoidal position information signals having a wavelength centred around six microns, the change in the head read gap separation varies from the normal fly height at the centre up to about ten microns at the edge. This width profile may be formed by blending a three degree bevel beginning between two and three tracks to each side of the centre of head 52 with a forty-five degree edge bevel beginning about five tracks to each side of the centre.

The sensitivity function shown in FIG. 8 is flat in the central head region and includes one half-cycle of an approximately cosine-shaped function on each side of the central region. This results in generally sinusoidal sensitivity gain characteristics in the regions of decreasing sensitivity, as seen as absolute values in FIG. 9. This preferred characteristic has the advantage of filtering undesirable harmonics of the radial sensitivity from the position information signals and making the head 52 less sensitive to variations in head width or track width.

Because the track reading surface 54 of head 52 varies in sensitivity across at least some of the spanned tracks 24, there is always gain in the position error signal in response to radial movement of the head. For example, if both edges of the head are over edge fringes during incremental radial movement, certain of the tracks 24 are beneath variable sensitivity regions of the surface 52. As the head moves, the change in amplitude of the signals detected from the tracks provides a change in the summed position error signal that is utilised in position feedback control. The head 54 spans multiple track widths and has the advantages of linearity in position error signal gain described above with reference to the servo transducer head 12.

Other approaches could be employed to vary transducer sensitivity across the head width. For example, the length of the transducer gap in the direction parallel to the servo information tracks could be varied across the width of the head. However, the illustrated head 52 has the advantage that it can be easily and inexpensively manufactured. A further advantage of the invention is that both heads 12 and 52 are relatively large and sturdy shapes.

The linearity of the position error signal gain characteristic achieved by the present invention provides flexibility in the design and use of the disk drive unit 10. Because the servo transducer head can be accurately positioned at any radial location, radial offsets between data and servo information tracks are possible, and a direct integer correspondence between data and the servo information tracks is unnecessary. With increased amplitude and regular gain, the servo information track pitch of conventional systems may be decreased without sacrificing feedback position control accuracy.

## Claims

1. A magnetic disk file (10) including:
at least one disk (18, 20) mounted for rotation about an axis;
a plurality of data tracks (22) on at least a first disk surface;
a plurality of servo tracks (24) on at least a second disk surface in fixed positional relationship with said data tracks, said servo tracks including phase-encoded position information signals whereby their phase is skewed from one servo track to the next in radial progression across the disk;
a data head (28) mounted for movement across said first disk surface for transferring data to or from individual data tracks;
a servo head (12) mounted for movement across said second disk surface for reading said phase-encoded position information signals from said servo tracks, the servo and data heads being ganged for movement together;
a position control system (42) for positioning said servo head at a selected position relative to said servo tracks in response to the phase of said phase-encoded position information signals;
and characterised in that said servo head has a sensitive width sufficient to span at least three of said servo tracks.

2. A disk file as claimed in claim 1 wherein said servo head spans eight of said servo tracks.

3. A disk file as claimed in claim 1 in which said radial progression of position information signals repeats after every "n" servo tracks, and in which the width of the servo head spans n/2 of said servo tracks.

4. A disk file as claimed in any preceding claim, wherein the sensitivity of said servo head (52) to said position information signals varies across the width of said servo head.

5. A disk file as claimed in claim 4, wherein the sensitivity of said servo head to said position information signals is greatest at the centre of said servo head.

6. A disk file as claimed in claim 5 or claim 7, in which said servo head is separated from said spanned servo information tracks by a nonuniform distance.

7. A disk file as claimed in any preceding claim which includes a plurality of disks (18, 20), said first and second disk surfaces being located on different ones of said plurality disks.

## Patentansprüche

1. Ein Magnetplattenspeicher (10), der folgendes einschließt:
Mindestens eine Platte (18, 20), die zur Rotation um eine Achse herum montiert ist;
Eine Vielzahl von Datenspuren (22) auf mindestens einer ersten Plattenoberfläche;
Eine Vielzahl von Servospuren (24) auf mindestens einer zweiten Plattenoberfläche in fester Positionsbeziehung zu den Datenspuren, wobei die Servospuren phasencodierte Positionsinformationssignale enthalten, wodurch deren Phase von einer Servospur zur nächsten im radialen Verlauf über die Platte hinweg versetzt ist;
Ein Datenkopf (28), der so montiert ist, daß er sich über die erste Plattenoberfläche hinweg bewegt, um Daten auf oder von den einzelnen Datenspuren zu übertragen;
Ein Servokopf (12), der so montiert ist, daß er sich über die zweite Plattenoberfläche hinweg bewegt, um die phasencodierten Positionsinformationssignale aus den Servospuren zu lesen, wobei die Servo- und die Datenköpfe miteinander gekoppelt sind, damit sie sich gemeinsam bewegen;
Ein Positionssteuersystem (42) zur Positionierung des Servokopfes an einer ausgewählten Position relativ zu den Servospuren als Reaktion auf die Phase der phasencodierten Positionsinformationssignale;
und dadurch gekennzeichnet, daß der Servokopf eine Empfindlichkeitsbreite aufweist, die zur Überlagerung von mindestens drei Servospuren ausreicht.

2. Ein Plattenspeicher wie in Patentanspruch 1 offenbart, in dem sich der Servokopf über acht Servospuren erstreckt.

3. Ein Plattenspeicher wie in Patentanspruch 1 offenbart, in dem sich die radiale Folge von Positionsinformationssignalen alle "n" Servospuren wiederholt, und in dem sich die Breite des Servokopfes über n/2 der Servospuren erstreckt.

4. Ein Plattenspeicher wie in einem beliebigen der vorstehenden Patentansprüche offenbart, in dem die Empfindlichkeit des Servokopfes (52) gegenüber den Positionsinformationssignalen über die Breite des Servokopfes variiert.

5. Ein Plattenspeicher wie in Patentanspruch 4 offenbart, in dem die Empfindlichkeit des Servokopfes gegenüber den Positionsinformationssignalen in der Mitte des Servokopfes am größten ist.

6. Ein Plattenspeicher wie in Patentanspruch 5 oder 7 offenbart, in dem der Servokopf von den überlagerten Servoinformationsspuren durch einen ungleichmäßigen Abstand getrennt ist.

7. Ein Plattenspeicher wie in einem beliebigen der vorstehenden Patentansprüche offenbart, der eine Vielzahl von Platten (18, 20) umfaßt, wobei sich die ersten und zweiten Plattenoberflächen auf unterschiedlichen Platten aus dieser Vielzahl von Platten befinden.

## Revendications

1. Mémoire à disque magnétique (10) comprenant :
au moins un disque (18, 20) monté à rotation autour d'un axe;
une pluralité de pistes de données (22) sur au moins une première surface de disque;
une pluralité de pistes d'asservissement (24) sur au moins une deuxième surface de disque, placées en une relation de position fixe par rapport auxdites pistes de données, lesdites pistes d'asservissement comprenant des signaux d'information de position à codage de phase, de manière que leur phase soit modifiée lorsqu'on passe d'une piste d'asservissement à la suivante, en progression radiale, sur le disque;
une tête de données (28), montée afin de se déplacer sur ladite première surface de disque afin de transférer des données à destination ou depuis des pistes de données individuelles;
une tête d'asservissement (12) montée de façon à pouvoir se déplacer sur ladite seconde surface de disque afin de lire lesdits signaux d'information de position à codage de phase à partir desdites pistes d'asservissement, les têtes d'asservissement et de données étant assujetties pour se déplacer conjointement;
un système de commande de position (42), destiné à assurer le positionnement de ladite tête d'asservissement en une position sélectionnée par rapport auxdites pistes d'asservissement, en réponse à la phase des signaux d'information de position à codage de phase;
et caractérisée en ce que ladite tête d'asservissement à une largeur sensible suffisante pour couvrir au moins trois desdites pistes d'asservissement.

2. Mémoire à disque selon la revendication 1, dans laquelle ladite tête d'asservissement couvre huit desdites pistes d'asservissement.

3. Mémoire à disque selon la revendication 1, dans laquelle ladite progression radiale des signaux d'information de position se répète toutes les "n" pistes d'asservissement et dans laquelle la largeur de la tête d'asservissement couvre n/2 desdites pistes d'asservissement.

4. Mémoire à disque selon l'une quelconque des revendications précédentes, dans laquelle la sensibilité de ladite tête d'asservissement (52) aux signaux d'information de position varie sur la largeur de ladite tête d'asservissement.

5. Mémoire à disque selon la revendication 4, dans laquelle la sensibilité de ladite tête d'asservissement auxdits signaux d'information de position est maximale au centre de ladite tête d'asservissement.

6. Mémoire à disque selon la revendication 5 ou la revendication 7, dans laquelle ladite tête d'asservissement est espacée desdites pistes d'information d'asservissement couvertes, ceci d'une distance non uniforme.

7. Mémoire à disque selon l'une quelconque des revendications précédentes, comprenant une pluralité de disques (18, 20), lesdites première et deuxième surfaces de disque étant situées sur des disques différents de ladite pluralité de disques.
